(19) Europäisches Patentamt
European Patent Office
Office européen des brevets

(11) Veröffentlichungsnummer: **0 522 400 A2**

(12) **EUROPÄISCHE PATENTANMELDUNG**

(21) Anmeldenummer: **92110962.5**

(51) Int. Cl.5: **C08G 63/676**, C08G 63/52

(22) Anmeldetag: **29.06.92**

(30) Priorität: **10.07.91 DE 4122765**

(43) Veröffentlichungstag der Anmeldung:
**13.01.93 Patentblatt 93/02**

(84) Benannte Vertragsstaaten:
**AT BE CH DE ES FR GB GR IT LI NL SE**

(71) Anmelder: **BAYER AG**

**W-5090 Leverkusen 1 Bayerwerk(DE)**

(72) Erfinder: **Meixner, Jürgen, Dr.**
**Josef-Brocker-Dyk 56**
**W-4150 Krefeld(DE)**
Erfinder: **Pedain, Josef, Dr.**
**Am Haferkamp 6**
**W-5000 Köln 80(DE)**
Erfinder: **Büchel, Karl Heinz, Prof. Dr.**
**Dabringhausener Strasse 42**
**W-5093 Burscheid(DE)**
Erfinder: **Traenckner, Hans-Joachim, Dr.**
**An der Steinrütsch 30**
**W-5090 Leverkusen 1(DE)**

(54) **Ungesättigte Ester, ein Verfahren zu ihrer Herstellung und ihre Verwendung.**

(57) $\alpha$-, $\beta$-ethylenisch ungesättigte Polyester des Molekulargewichtsbereichs $M_n$ 300 bis 10.000, mit einem Gehalt an über Etherbrücken eingebauten Octadienylgruppen von 5 bis 70 Gew`-% und Esterresten ungesättigter Diacarbonsäuren von 10 bis 65 Gew`-%, ein Verfahren zur ihrer Herstellung durch Umsetzung ungesättigter Dicarbonsäuren und/oder deren Anhydriden, gegebenenfalls im Gemisch mit gesättigten Dicarbonsäuren bzw. deren Anhydriden mit Octadienylreste aufweisenden ein- oder mehrwertigen Etheralkoholen des Molekulargewichtsbereichs 170 bis 1.000, gegebenenfalls in Gemisch mit anderen ein- oder mehrwertigen Alkoholen des Molekulargewichtsbereichs 32 bis 200 und ihre Verwendung zur Herstellung von Formkörpern oder als Bindemittel für Überzugsmittel, Spachtel- und Dichtmassen.

EP 0 522 400 A2

Die Erfindung betrifft Octadienylethergruppen enthaltende, monomerenfreie, α, β-ethylenisch ungesättigte Ester, ein Verfahren zu ihrer Herstellung und ihre Verwendung als Bindemittel für Überzugs- oder Spachtelmassen, sowie zur Herstellung von Formkörpern.

Die gebräuchlichen Bindemittel auf Basis ungesättigter Polyester enthalten α, β-ethylenisch ungesättigte Polyester und damit copolymerisierbare Monomere. Als Monomer wird fast ausschließlich Styrol eingesetzt. Während der Verarbeitung verdunstet Styrol, das die kostenspielige Reinigung der Luft der Fabrikationshallen und der Abluft der Trockenanlagen notwendig macht.

Ungesättigte Polyester, die frei von copolymerisierbaren Monomeren sind und durch UV-Bestrahlung gehärtet werden können, werden z.B. in der DE-PS 2 221 335 beschrieben.

In Anwesenheit von Peroxiden härtbare monomerenfreie Spachtelmassen auf Basis ungesättigter Polyester sind aus der DE-OS 3 409 271 bekannt. Beide Systeme enthalten ungesättigte Polyester mit Resten von Allylethern mehrwertiger Alkohole. Bei der Härtungsreaktion treten jedoch infolge Autoxidation der Allylethergruppen flüchtige Abspaltprodukte auf, die zu einer Geruchsbelästigung führen.

Aufgabe der Erfindung war es, ungesättigte Ester herzustellen, die sich zur Herstellung monomerenfreier, radikalisch härtbarer Überzugs- oder Spachtelmassen sowie Formkörpern eignen und die gleichzeitig den Systemen des genannten Standes der Technik bezüglich der technischen Eigenschaften mindestens ebenbürtig sind ohne deren Nachteile zu besitzen.

Überraschenderweise wurde nun gefunden, daß monomerenfreie, α, β-ethylenisch ungesättigte Ester, die Octadienylgruppen in über Etherbrücken gebundener Form enthalten, die gestellten Anforderungen erfüllen. Sie können mittels Radikalbildner wie z.B. Peroxiden und auch durch Strahlenhärtung vernetzt werden.

In der US-PS 4 378 251 werden zwar bereits Beschichtungsmittel auf Basis von ungesättigten, Octadienylgruppen aufweisenden Polyesterharzen beschrieben, jedoch handelt es sich bei den Bindemitteln dieser Vorveröffentlichung um Ethergruppen-freie Umsetzungsprodukte von Octadienol mit ungesättigten Carbonsäuren bzw. Derivaten ungesättigter Dicarbonsäuren, die nur bei erhöhten Temperaturen aushärtbar sind. Die Vorveröffentlichung enthält keinerlei Hinweis, die Octadienylgruppen über Etherbrücken in die Harze einzubauen, um auf diese Weise zu wesentlich schneller, insbesondere auch bei Raumtemperatur aushärtbaren Harzen zu gelangen. Im übrigen fehlt jeglicher Hinweis darauf, daß die Beschichtungsmittel auch peroxidisch ausgehärtet werden können.

Gegenstand der Erfindung sind α, β-ethylenisch ungesättigte Polyester des Molekulargewichtsbereichs $M_n$ von 300 bis 10.000, gekennzeichnet durch einen Gehalt an

a) über Etherbrücken eingebaute Octadienylgruppen (berechnet als $C_8H_{13}$) von 5 bis 70 Gew.-% und

b) Esterresten ungesättigter Dicarbonsäuren (berechnet als $C_4H_2O_4$) von 10 bis 65 Gew.-%.

Gegenstand der Erfindung ist auch ein Verfahren zur Herstellung dieser ungesättigten Polyester durch an sich bekannte Veresterung einer Dicarbonsäurekomponente A) mit einer Alkoholkomponente unter Einhaltung eines Äquivalentverhältnisses von Carboxylgruppen der Komponente A) zu Hydroxylgruppen der Komponente B) von höchstens 1:1,

dadurch gekennzeichnet, daß die Komponente A) zu 50 bis 100 Carboxyl-Äquivalent-% aus α, β-ethylenisch ungesättigten Dicarbonsäuren und/oder deren Anhydriden und zu 0 bis 50 Carboxyl-Äquivalent-% aus aliphatischen gesättigten Dicarbonsäuren mit 4 bis 10 Kohlenstoffatomen, cycloaliphatischen Dicarbonsäuren mit 8 bis 10 Kohlenstoffatomen und/oder aromatischen Dicarbonsäuren mit 8 bis 12 Kohlenstoffatomen und/oder den Anhydriden derartiger Dicarbonsäuren besteht und die Komponente B) zu 5 bis 100 Hydroxyl-Äquivalent-% aus über Etherbrücken eingebaute Octadienylreste aufweisenden ein- oder mehrwertigen Alkoholen des Molekulargewichtsbereichs 170 bis 1 000 und zu 0 bis 95 Hydroxyl-Äquivalent-% aus anderen ein- oder mehrwertigen Alkoholen des Molekulargewichtsbereichs 32 bis 200 besteht.

Gegenstand der Erfindung ist auch die Verwendung der ungesättigten Polyester zur Herstellung von Formkörpern, sowie als Bindemittel für Überzugsmittel, Spachtel- und Dichtmassen.

Die beim erfindungsgemäßen Verfahren einzusetzende Säurekomponente A) weist die bereits genannte Zusammensetzung auf. Bevorzugte α, β-ethylenisch ungesättigte Dicarbonsäuren bzw. Dicarbonsäureanhydride sind solche mit 4 bis 5 Kohlenstoffatomen wie Maleinsäure, Fumarsäure, Itaconsäure oder Maleinsäureanhydrid. Fumarsäure, Maleinsäure und/oder Maleinsäureanhydrid werden besonders bevorzugt beim erfindungsgemäßen Verfahren als α, β-ethylenisch ungesättigte Dicarbonsäure-Komponente verwendet.

Geeignete aliphatische gesättigte Dicarbonsäuren mit 4 bis 10 Kohlenstoffatomen sind insbesondere Bernsteinsäure, Adipinsäure und/oder Sebacinsäure oder die Anhydride derartiger Säuren. Geeignete cycloaliphatische Dicarbonsäuren oder Dicarbonsäureanhydride mit 8 bis 10 Kohlenstoffatomen sind beispielsweise Tetrahydrophthalsäure, Hexahydrophthalsäure, Norbornendicarbonsäure oder die Anhydride derartiger Säuren. Geeignete aromatische Dicarbonsäuren oder Dicarbonsäureanhydride mit 8 bis 12 Kohlenstoffatomen sind beispielsweise Phthalsäure, Phthalsäureanhydrid, Isophthalsäure oder Terephthalsäure. Phthalsäure bzw. Phthalsäureanhydrid sind als aromatische Dicarbonsäurekomponente bevorzugt.

Die Alkoholkomponente B) weist die bereits oben genannte Zusammensetzung auf. Vorzusgweise besteht die Alkoholkomponente B) zu 10 bis 100 Hydroxyl-Äquivalent-% aus Octadienylgruppen aufweisenden ein- und/oder mehrwertigen Alkoholen des Molekulargewichtsbereichs 170 bis 800 und zu 0 bis 90 Hydroxyl-Äquivalent-% aus anderen ein- und/oder mehrwertigen Alkoholen des Molekulargewichtsbreichs 62 bis 200.

Die erfindungswesentlichen Octadienylgruppen aufweisenden Alkohole werden durch Telomerisation von Butadien mit mehrwertigen Alkoholen erhalten. DieseUmsetzung ist an sich bekannt und beispielsweise in DE-OS 2 148 156, DE-OS 2 011 163, GB-PS 2 114 974, J. Chem. Soc. D. (4), 193-4 (1971) oder Izv. Akad. Nauk SSSR, Ser. Khim. (1981) (8), S. 1837-1842 beschrieben.

Bei den erfindungswesentlichen Octadienylgruppen handelt es sich um Struktureinheiten der Summenformel-$C_8H_{13}$, die vorzugsweise der Strukturformel

$-CH_2-CH=CH-CH_2-CH_2-CH_2-CH=CH_2$

entsprechen und über Etherbrücken -O- in die Alkohole und damit auch in die erfindungsgemäßen Polyester eingebaut sind.

Als Startermoleküle für die genannte Telomerisation kommen mehrwertige Alkohole des Molekulargewichtsbereichs 62 bis 400 wie beispielsweise Ethylenglykol, Propylenglykol, Glycerin, Trimethylolpropan, Pentaerythrit, Sorbit, Saccharose oder Gemische derartiger Alkohole in Betracht. Die Telomerisation wird vorzugsweise in Gegenwart von Palladiumkatalysatoren wie beispielsweise Palladium-Phosphinkomplexen und oftmals in Gegenwart von Lösungsmitteln wie beispielsweise Isopropanol durchgeführt.

Bei der Telomerisation muß selbstverständlich durch geeignete Wahl der Mengenverhältnisse der Reaktionspartner darauf geachtet werden, daß freie Hydroxylgruppen aufweisende Telomerisationsprodukte entstehen, die als Ausgangskomponente B) bzw. Teil der Ausgangskomponente B) verwendbar sind, Besonders bevorzugt werden solche Telomerisate eingesetzt, die auf mindestens dreiwertigen Alkoholen oder in statistischen Mitteln mindestens trifunktionellen Alkoholgemischen als Ausgangskomponente basieren, und die im Mittel pro Molekül mindestens eine freie Hydroxylgruppe aufweisen, Besonders gut geeignet sind die Telomerisationsprodukte von Glycerin und Butadien des Hydroxylzahlbereichs 182 bis 561 und/oder die Telomerisationsprodukte von Trimethylolpropan und Butadien des Hydroxylzahlbereichs 160 bis 464.

Die gegebenenfalls in der Komponente B) außerdem noch vorliegenden, von den erfindungswesentlichen ungesättigten Alkoholen verschiedenen ein- und/oder mehrwertigen Alkohole sind solche der an sich bekannten Art wie beispielsweise Methanol, Ethanol, n-Butanol, Isooctanol, Benzylalkohol, Ethylenglykol, Propylenglykol, Diethylenglykol, Tetramethylendiol, Hexamethylendiol oder beliebige Gemische derartiger ein- oder mehrwertiger Alkohole.

Bei der Durchführung der erfindungsgemäßen Veresterungsreaktion werden die Ausgangskomponenten A) und B) in solchen Mengen eingesetzt, die einem Äquivalentverhältnis von Carboxylgruppen zu Hydroxylgruppen von höchstens 1:1, vorzugsweise von 1:1 bis 1:1,5 entsprechen.

Die Herstellung der erfindungsgemäßen Ester, d.h. die Durchführung des erfindungsgemäßen Verfahrens kann nach bekannten Methoden, z.B. durch Schmelz- oder Azeotropveresterung der Alkohole und Säuren oder deren veresterungsfähigen Derivate erfolgen, vgl. "Methoden der organischen Chemie" (Houben-Weyl), 4. Aufl. Bd. 14/2, Georg Thieme Verlag, Stuttgart 1961, S. 1 - 5, 21 - 33, 40-44.

Vorzugsweise erfolgt die Durchführung des erfindungsgemäßen Verfahrens unter Inertgasatmosphäre bei Temperaturen von 140-220 ° C.

Um die erfindungsgemäßen Ester vor unerwünschter vorzeitiger Vernetzung zu bewahren, empfiehlt es sich, bereits bei der Herstellung der Ester 0,001 - 0,1 Gew.-% Polymerisationsinhibitoren oder Antioxidatien zuzusetzen. Geeignete Stabilisatoren sind in "Methoden der organischen Chemie" (Houben-Weyl), 4. Aufl, Bd. 14/1, S. 433 ff, Georg Thieme Verlag, Stuttgart 1961, beschrieben, Sehr gut geeignet ist z,B, p-Benzochinon in einer Konzentration von 0,01 - 0,05 Gew.-%, bezogen auf erfindungsgemäße Ester.

Bei der Durchführung des erfindungsgemäßen Verfahrens werden im übrigen Art und Mengenverhältnisse der Ausgangskomponenten im Rahmen der gemachten Ausführungen und die Reaktionsbedingungen so gewählt, daß die resultierenden erfindungsgemäßen Polyester ein nach der Methode der Gelpermeationschromatographie unter Verwendung von Polystyrol als Standard ermittelbares Molekulargewicht $M_n$ von 300 bis 10.000, vorzugsweise 400 bis 5.000, ein Gehalt an über Etherbrücken eingebauten Octadienylgruppen (berechnet als $C_8H_{13}$) von 5 bis 70, vorzugsweise 10 bis 65 Gew.-%, einen Gehalt an ungesättigten Dicarbonsäureesterresten der Formel

$$-O-\overset{\overset{O}{\|}}{C}-CH=CH-\overset{\overset{O}{\|}}{C}-O-$$

von 10 bis 65, vorzugsweise 15 bis 60 Gew.-% und Säurezahlen von 0 bis 80, vorzugsweise 5 bis 50, aufweisen.

Die erfindungsgemäßen Polyester stellen im allgemeinen klare, niedrig-, mittel- bis hochviskose Flüssigkeiten dar. Die Überführung der Octadienylgruppen enthaltenden ungesättigten Ester, die Kunststoffvorläufer darstellen, in ausgehärtete Kunststoffe erfolgt im allgemeinen nach vorangegangener Formgebung.

Der Begriff "Formgebung" soll im Rahmen der Erfindung sowohl die Herstellung beliebiger dreidimensionaler, ausgehärteter Formkörper als auch ausgehärteter Kitte oder Spachtelmassen oder Flächengebilde, insbesondere ausgehärteter Lacküberzüge umfassen. Besonders bevorzugt werden die erfindungsgemäßen Produkte als Lackbindemittel zur Herstellung von Lacküberzügen auf beispielsweise Papier, Kartonage, Leder, Holz, Kunststoffe, Vlies, Textilien, keramische Materialien, mineralische Materialien, Glas, Metall, Kunstleder und als Bindemittel für Spachtel- und Dichtmassen eingesetzt.

Je nach angestrebtem Verwendungszweck und in Abhängigkeit von der Viskosität können die Octadienylgruppen aufweisenden, ungesättigten Ester vor der Formgebung mit Hilfs- und Zusatzmitteln der unterschiedlichsten Art abgemischt werden.

Hierzu gehören Füllstoffe, Pigmente, Farbstoffe, Thixotropiermittel, Glättmittel, Mattierungsmittel und Verlaufsmittel, die in üblichen Mengen eingesetzt werden können. Insbesondere zur Herstellung von Lacküberzügen können die erfindungsgemäßen Produkte auch in an sich bekannten Lacklösungsmitteln gelöst oder in Wasser emulgiert zum Einsatz gelangen.

Beispiele für geeignete Lacklösungsmittel sind Aceton, Butylacetat oder Xylol.

Diese Lösungsmittel können in Mengen von jeweils bis zu 70 Gew.-%, vorzugsweise bis zu 60 Gew.-%, bezogen auf das Gesamtgewicht der Mischung inklusive Lösungsmittel, eingesetzt werden.

Obwohl nicht notwendig, ist es auch möglich, die erfindungsgemäßen Produkte mit copolymerisierbaren Monomeren abzumischen. Beispiele für geeignet copolymerisierbare Monomere sind organische Verbindungen, die mindestens eine copolymerisierbare, olefinische Doppelbindung pro Molekül und bei 23 °C eine Viskosität von maximal 500 mPa.s aufweisen.

Falls die erfindungsgemäßen Produkte aus wäßriger Emulsion verarbeitet werden sollen, kann die Herstellung entsprechender wäßriger Emulsionen beispielsweise mit Hilfe von Emulgatoren und gegebenenfalls üblicher in der Emulsionstechnik angewandter Hilfsmittel erfolgen.

Hierfür geeignete Emulgatoren sind bekannt und z.B. in Ullmanns Enzyklopädie der techn. Chemie, Bd. 10, 4. Aufl, S. 449 ff. beschrieben.

Die wäßrigen Emulsionen enthalten im allgemeinen 10 bis 70 Gew.-%, vorzugsweise 30 bis 70 Gew.-% der erfindungswesentlichen Octadienylgruppen aufweisenden ungesättigten Ester. Die Herstellung der Emulsionen kann durch Einrühren von Wasser in das Gemisch aus erfindungsgemäßem Produkt und Emulgator z.B. durch einfaches Rühren oder mittels Dissolver erfolgen.

Zur Ausbildung einer feinteiligen Emulsion, d.h. zur besseren Einbringung der Scherkräfte, ist portionsweise Wasserzusatz bei Temperaturen unter 30 °C vorteilhaft. Bei optimaler Scherung werden Öl-in-Wasser-Emulsionen gebildet.

Die Aushärtung der erfindungsgemäß verwendeten erfindungsgemäßen Produkte erfolgt, gegebenenfalls nach Verdunsten von flüchtigen Hilfsmitteln wie inerte Lösungsmittel oder Wasser, entweder mittels energiereicher Strahlung, wie UV-Licht, Elektronen- oder Gammastrahlen oder durch peroxidische Härtung in Kombination mit (Hydro)Peroxiden, gegebenenfalls unter gleichzeitiger Mitverwendung von Sikkativen bei Temperaturen zwischen Raumtemperatur und 250 °C. Falls auf eine schnelle Aushärtung verzichtet werden kann, kommt auch eine ausschließlich oxidative Härtung unter Zusatz von Sikkativen in Abwesenheit von (Hydro)-Peroxiden in Betracht.

Die gegebenenfalls eingesetzten Sikkative sind z.B. Cobalt-, Blei- oder Mangansalze von Säuren wie Leinölfettsäure, Naphtensäure, Essigsäure oder Isooctansäure.

Sie werden, falls überhaupt, im allgemeinen in solchen Mengen eingesetzt, daß der Metallgehalt, bezogen auf das Gewicht der erfindungsgemäßen Produkte, 0,001 bis 1 Gew.-% entspricht.

Als (Hydro)Peroxide seien beispielhaft genannt: Dicumylperoxid, Di-tert.-butylperoxid, Benzoylperoxid, Cyclohexanonperoxid, Methylethylketonperoxid, Acetylacetonperoxid, Dinonylperoxid, Bis-(4-tert.-butylcyclohexyl)-peroxydicarbonat, tert.-Butylhydroperoxid, 2,5-Dimethylhexan-2,5-hydroperoxid), Diisopropyl-benzolmonohydroperoxid und Wasserstoffperoxid, Vorzugsweise werden diese (Hydro)Peroxide in Mengen von 1

bis 10 Gew.-%, bezogen auf das Gewicht der erfindungsgemäßen Produkte, eingesetzt.

Der Zusatz anderer Verbindungen, die durch Bildung von Radikalen eine Vernetzungsreaktion starten können, ist ebenfalls möglich. Gleichfalls ist es möglich, eine Kombination aus einer durch (Hydro)-Peroxide gestarteten und einer durch energiereicher Strahlung erfolgten Vernetzung durchzuführen, um z.B. eine deckend pigmentierte Beschichtung nach DE-OS 3 612 422 zu erhalten.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in Houben-Weyl, Methoden der organischen Chemie, Band E 20, Seite 80 ff, Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-1-propan-1-on.

Die erwähnten Fotoinitiatoren, die je nach Verwendungszweck der erfindungsgemäßen Produkte in Mengen zwischen 0,1 bis 10 Gew`-%, vorzugsweise 0,1 bis 5 Gew.-%, bezogen auf das Gewicht der erfindungsgemäßen Produkte, eingesetzt werden, können als einzelne Substanz oder, wegen häufiger vorteilhafter synergistischer Effekte, auch in Kombination miteinander verwendet werden`

Die nachfolgenden Beispiele dienen der weiteren Erläuterung der Erfindung.

## Beispiele

Die in der nachfolgenden Tabelle aufgeführten Ausgangskomponenten wurden bei 160-180 °C unter einem Stickstoffstrom der Schmelzkondensation unterworfen, bis die angegebene Säurezahl erreicht war. Die erhaltenen Polyester wurden mit 2 Gew`-% Kobaltoctoatlösung (2,2 Gew.-% Co) und 3 Gew.-% Methylethylketonperoxid gemischt, ein Überzug von 90 µm Dicke auf Glasplatten hergestellt und bei 24 °C gehärtet. Die Zeit bis zu Klebfreiheit kann der Tabelle entnommen werden.

Nach der Trocknung sind alle Lackfilmoberflächen kratzfest außer denen der Vergleichsbeispiele 7 und 8.

Die verwendeten Octadienylether wurden durch Telomerisation von Butadien mit Glycerin bzw. Trimethylolpropan erhalten.

| | BEISPIELE | | | | | | Vergleichsbeispiele | |
|---|---|---|---|---|---|---|---|---|
| | 1 | 2 | 3 | 4 | 5 | 6 | 7 | 8 |
| **Einwaage (Gew.-%)** | | | | | | | | |
| Fumarsäure | 44,3 | | 20,2 | 39,0 | | | | 50,5 |
| Maleinsäureanhydrid | | 37,4 | | | 48,7 | 45,9 | | |
| Phthalsäureanhydrid | | | 25,8 | | | | 47,5 | |
| Ethylenglykol | 15,9 | 15,9 | 14,5 | 14,0 | 28,3 | 26,6 | 13,3 | 18,1 |
| 1,2-Propandiol | | | | | 7,5 | 7,1 | | |
| Benzylalkohol | 16,5 | 16,5 | 15,1 | 14,5 | | | 13,9 | 47,1 |
| Glycerinoctadienylether[1)] | 37,1 | 37,1 | 33,8 | | 24,1 | | 31,1 | |
| Trimethylolpropanoctadienylether[2)] | | | | 44,6 | | 28,6 | | |
| **COOH/OH-Äquivalentverhältnis** | 1:1,17 | 1:1,17 | 1:1,17 | 1:1,2 | 1:1,27 | 1:1,27 | 1:1,17 | 1:1,17 |
| **Kenndaten** | | | | | | | | |
| Säurezahl | 35 | 25 | 17 | 17 | 46 | 33 | 6 | 29 |
| Viskosität (mPa.s/23°C) | 44000 | 37600 | 36700 | 44300 | 5500[3)] | 6600[3)] | 28100 | 39000 |
| **Ungesättigte Dicarbonsäureestergruppen** ($C_4H_2O_4$, Gew.-%) | 43,6 | 43,6 | 19,9 | 38,3 | 56,1 | 52,8 | - | 49,7 |
| **Octadienylgruppen** ($C_8H_{13}$, Gew.-%) | 25,0 | 25,0 | 22,8 | 23,8 | 16,2 | 15,3 | 21,0 | - |
| **Trockenzeit** bis zur Klebfreiheit (h) | 3-4 | 3-4 | 4-5 | 3-4 | 3-4 | 3-4 | > 24 | > 24 |

1) Hydroxylzahl = 347, mittlere Hydroxylfunktionalität = 1,43
2) Hydroxylzahl = 275, mittlere Hydroxylfunktionalität = 1,47
3) 80 %ig in Butylacetat

## Patentansprüche

**1.** $\alpha$-, $\beta$-ethylenisch ungesättigte Polyester des Molekulargewichtsbereichs $M_n$ von 300 bis 10 000, gekennzeichnet durch einen Gehalt an

a) über Etherbrücken eingebaute Octadienylgruppen (berechnet als $C_8H_{13}$) von 5 bis 70 Gew.-% und

b) Esterresten ungesättigter Dicarbonsäuren (berechnet als $C_4H_2O_4$) von 10 bis 65 Gew,-%.

**2.** Verfahren zur Herstellung von ungesättigten Polyestern gemäß Anspruch 1 durch an sich bekannte Veresterung einer Dicarbonsäurekomponente A) mit einer Alkoholkomponente B) unter Einhaltung eines Äquivalentverhältnisses von Carboxylgruppen der Komponente A) zu Hydroxylgruppen der Komponente B) von höchstens 1:1,

dadurch gekennzeichnet, daß die Komponente A) zu 50 bis 100 Carboxyl-Äquivalent-% aus α-, β-ethylenisch ungesättigten Dicarbonsäuren und/oder deren Anhydriden und zu 0 bis 50 Carboxyl-Äquivalent-% aus aliphatischen gesättigten Dicarbonsäuren mit 4 bis 10 Kohlenstoffatomen, cycloaliphatischen Dicarbonsäuren mit 8 bis 10 Kohlenstoffatomen und/oder aromatischen Dicarbonsäuren mit 8 bis 12 Kohlenstoffatomen und/oder den Anhydriden derartiger Dicarbonsäuren besteht und die Komponente B) zu 5 bis 100 Hydroxyl-Äquivalent-% aus über Etherbrücken eingebaute Octadienylreste aufweisenden ein- oder mehrwertigen Alkoholen des Molekulargewichtsbereichs 170 bis 1 000 und zu 0 bis 95 Hydroxyl-Äquivalent-% aus anderen ein- oder mehrwertigen Alkoholen des Molekulargewichtsbereichs 32 bis 200 besteht.

**3.** Verfahren gemäß Anspruch 2, dadurch gekennzeichnet, daß die Komponenten A) und B) unter Einhaltung eines Äquivalentverhältnisses von Carboxylgruppen zu Hydroxylgruppen von 1:1 bis 1:1,5 zur Reaktion gebracht werden.

**4.** Verfahren gemäß Anspruch 2 und 3, dadurch gekennzeichnet, daß die Komponente A) zu 50 bis 100 Carboxyl-Äquivalent-% aus Fumarsäure, Maleinsäure und/oder Maleinsäureanhydrid und zu 0 bis 50 Carboxyl-Äquivalent-% aus Phthalsäure oder Phthalsäureanhydrid besteht.

**5.** Verfahren gemäß Anspruch 2 bis 4, dadurch gekennzeichnet, daß die Komponente B) zu 5 bis 100 Hydroxyl-Äquivalent-% aus Glycerinoctadienylether des OH-Zahlbereichs 182 bis 561 und/oder Trimethylolpropanoctadienylether des OH-Zahlbereichs 160 bis 464 und zu 0 bis 95 Hydroxyl-Äquivalent-% aus gesättigten (cyclo)aliphatischen oder araliphatischen ein- und/oder zweiwertigen Alkoholen des Molekulargewichtsbereichs 62 bis 200 besteht.

**6.** Verwendung der ungesättigten Polyester gemäß Anspruch 1 zur Herstellung von Formkörpern.

**7.** Verwendung der ungesättigten Polyester gemäß Anspruch 1 als Bindemittel für Überzugsmittel, Spachtel- und Dichtmassen.

**8.** Verwendung gemäß Anspruch 7 in Kombination mit (Hydro)Peroxiden als peroxidisch aushärtbares Bindemittel.